# EUROPEAN PATENT APPLICATION

(11) **EP 2 590 418 A1**
(43) Date of publication of application: **08.05.2013**
(21) Application number: 12190445.2
(22) Date of filing: 29.10.2012
(51) Int. Cl.: H04N 13/00

(54) **Dynamic depth image adjusting device and method thereof**

(30) Priority: 01.11.2011 TW 100139723
(71) Applicant: Acer Incorporated, Taipei Hsien 221 (TW)
(72) Inventor: Ko, Chueh-Pin, Taipei Hsien 221 (TW)
(74) Representative: Michalski Hüttermann & Partner Patentanwälte

(57) **Abstract**

A dynamic depth image adjusting method applied in a dynamic depth image adjusting device is provided. The method has the following steps of: receiving at least one input image; generating a two-dimensional image and a depth image thereof according to the input image; and generating a plurality of dynamic depth images by applying a pixel-offset profile to the depth image.

## Description

### CROSS REFERENCE TO RELATED APPLICATIONS

This Application claims priority of Taiwan Patent Application No. 100139723, filed on Nov. 1, 2011, the entirety of which is incorporated by reference herein.

### BACKGROUND OF THE INVENTION

### Field of the Invention

The present invention relates to image processing, and in particular relates to devices and methods to improve visual effects by adjusting the depth image.

### Description of the Related Art

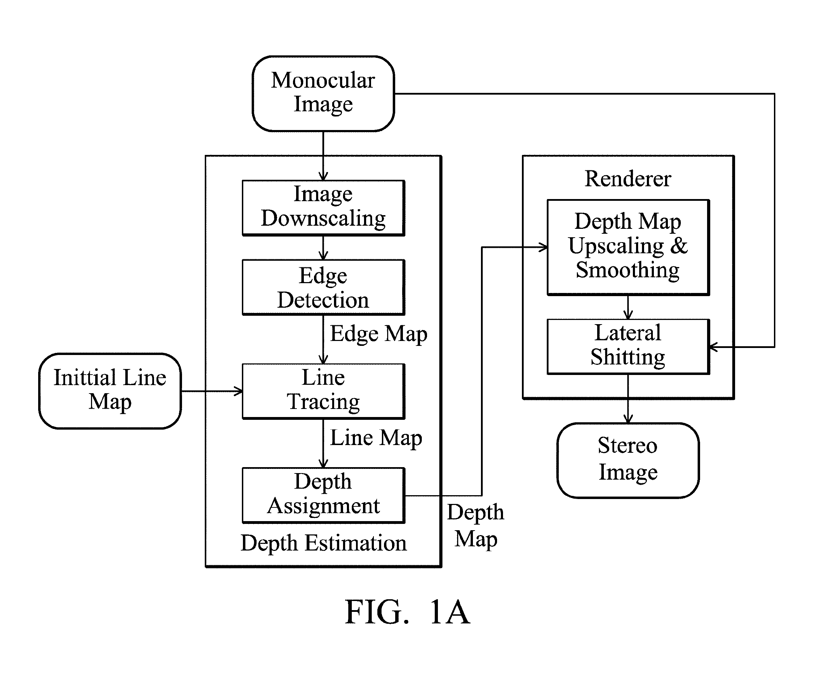

As technologies of stereoscopic image displaying devices develop, the techniques for processing stereoscopic images has become more and more crucial. Generally, the stereoscopic images can be obtained in several ways. For example, stereoscopic images can be captured by a depth camera capable of retrieving depth information, or captured by dual cameras capable of simulating human eyes, or converted from two-dimensional images through appropriate image processing. FIG. 1A illustrates a flow chart of conventional algorithms for converting a two-dimensional image to a stereoscopic image. As illustrated in FIG. 1A, the processing procedure for converting a two-dimensional image to a stereoscopic image can be roughly classified as having some steps of: image shrinking, edge detection, line tracing, depth assignment, depth image enlarging and smoothing, and lateral shifting. When the depth image is built, the depth image can be combined with the original two-dimensional image to generate a stereoscopic image. In conventional algorithms for converting a two-dimensional image to a stereoscopic image, some methods can be used, such as building a space model, edge detection, and calculating disappearing points, which may build the depth image by analyzing one or more images.

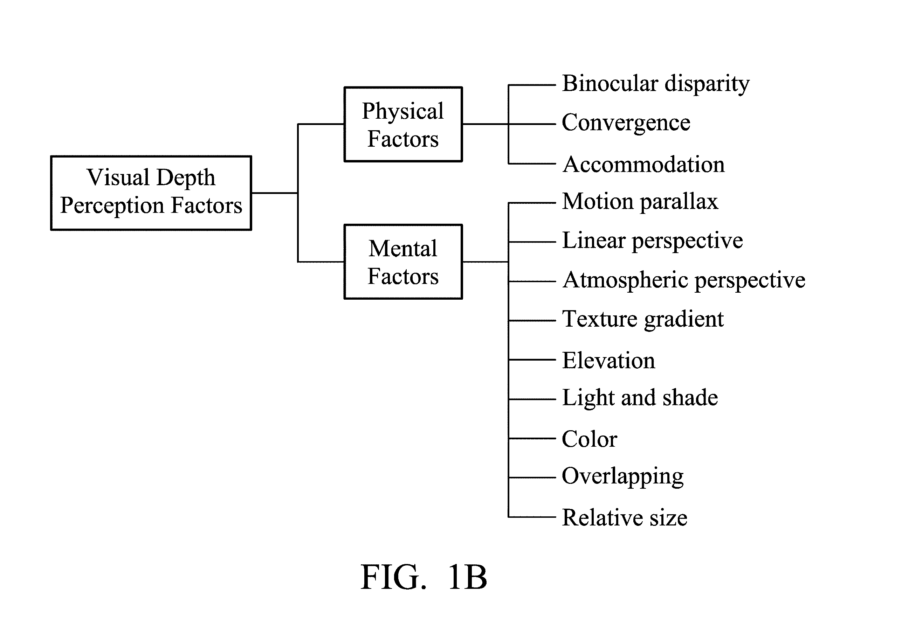

FIG. 1B illustrates a diagram of the visual depth perception factors. As illustrated in FIG. 1B, the visual depth perception factors can be classified as physical factors and mental factors. Generally, only some mental factors are used in the algorithm operations of the depth image corresponding to the stereoscopic image converted from a two-dimensional image. For example, yellow objects, objects with a great amount of motion, or large objects are usually considered as objects with the least depth due to the mental factors. Contrarily, blue objects, objects with a small amount of motion, or small objects are usually considered as objects with the deepest depth due to the mental factors, and objects with similar textures are considered as having the same depth.

The depth information is the key factor in stereoscopic image display technologies. After the depth image is generated, only the relative relationship between each object in the image can be defined. However, conventional stereoscopic image display technologies usually focus on ways for generating the correct depth information without using the depth information further to process the stereoscopic image. In addition, the pixel-offset profile is fixed in conventional stereoscopic image display technologies. For the invention, the pixel-offset profile is adjustable.

### BRIEF SUMMARY OF THE INVENTION

A detailed description is given in the following embodiments with reference to the accompanying drawings.

In an exemplary embodiment, a dynamic depth image adjusting method applied in a dynamic depth image adjusting device is provided. The method comprises the following steps of: receiving at least one input image; generating a two-dimensional image and a depth image thereof according to the input image; and generating a plurality of dynamic depth images by applying a pixel-offset profile to the depth image.

In another exemplary embodiment, a dynamic depth image adjusting device is provided. The device comprises: a depth analyzer configured to receive at least one input image, and generate a two-dimensional image and a depth image thereof according to the input image; and a stereoscopic image rendering unit configured to receive the two-dimensional image and the depth image, and generate a plurality of dynamic depth images by applying a pixel-offset profile to the depth image.

### BRIEF DESCRIPTION OF THE DRAWINGS

The present invention can be more fully understood by reading the subsequent detailed description and examples with references made to the accompanying drawings, wherein:

FIG. 1A illustrates a flow chart of conventional algorithms for converting a two-dimensional image to a stereoscopic image;

FIG. 1B illustrates a diagram of the visual depth perception factors;

FIG. 2 illustrates a block diagram of the dynamic depth image adjusting device 200 according to an embodiment of the invention;

FIG. 3A illustrates a histogram of the grey levels in a depth image corresponding to a two-dimensional image according to an embodiment of the invention;

FIG. 3B illustrates a diagram of the adjusting curve of the pixel-offset profile according to an embodiment of the invention;

FIGs. 4A~4C illustrate a diagram of the pixel-offset profile according to an embodiment of the invention;

FIG. 5 illustrates a diagram of the relationship between the adjusting curve and the depth image according to an embodiment of the invention;

FIG. 6A illustrates a table of the pixel-offset profile of a still image according to an embodiment of the invention;

FIG. 6B illustrates a table of the pixel-offset profiles of a dynamic image according to an embodiment of the invention; and

FIG. 7 illustrates a flow chart of the dynamic depth image adjusting method according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

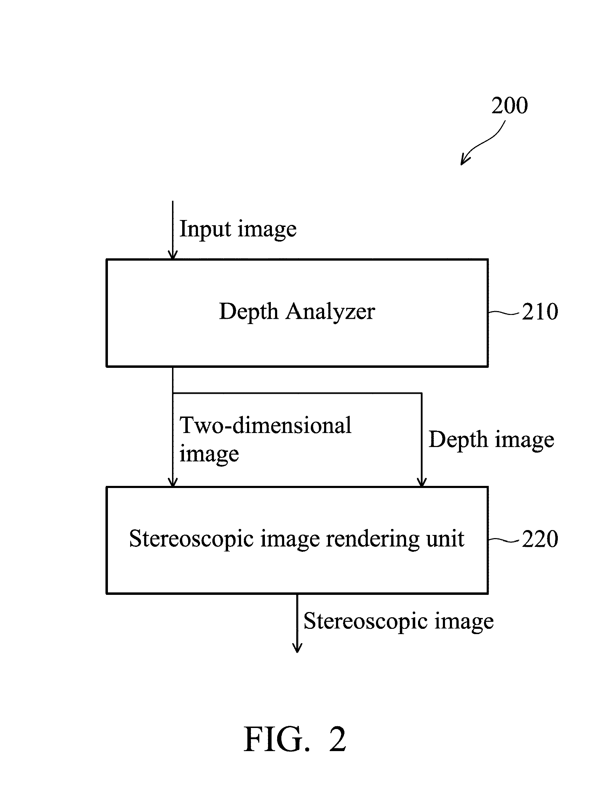

FIG. 2 illustrates a block diagram of the dynamic depth image adjusting device 200 according to an embodiment of the invention. The dynamic depth image adjusting device 200 may comprise a depth analyzer 210 and a stereoscopic image rendering unit 220, wherein the depth analyzer 210 is configured to receive a two-dimensional image, generate a three-dimensional image and a corresponding depth image by using the prior algorithms for converting two-dimensional images to three-dimensional images, and output a stereoscopic image through the stereoscopic image rendering unit 220. While rendering the stereoscopic image, the stereoscopic image rendering unit 220 may apply the dynamically adjusted extrema (i.e. maximum and minimum) and middle values to the depth image according to each two-dimensional image and the corresponding depth image, thereby generating the perception of dynamic stereoscopic visual effects.

Given that the image source is a conventional two-dimensional film, the depth analyzer 210 may continuously output two-dimensional images and corresponding depth images thereof while playing the two-dimensional film, and generate stereoscopic images through the stereoscopic image rendering unit 220. Generally, the depth image can be expressed by a range of gray level values (e.g. from 0 to 255) to indicate different depths. For example, the gray level 255 may indicate that the scene is closest to the lens, as well as the gray level 0 may indicate that the scene is farthest from the lens.

In another embodiment, there are various ways to determine whether the input image is still. For example, the depth analyzer 210 may calculate the histogram of gray levels in the input image. If there is no variance in the histogram, the input image is determined as a still image. In addition, when all the pixels in the input image are not updated, the input image can be determined as a still image. The depth analyzer 210 may know that the current status refers to pausing the film by receiving an image pause signal from an image display device (not shown in FIG. 2) (e.g. the user presses the "pause" button on a remote controller), and thus the input image can be determined as a still image. Moreover, the display device may stop sending the input image, and the depth analyzer 210 may determine the input image as being a still image by receiving an image pause signal from the display device, but the invention is not limited thereto.

It should be noted that when a two-dimensional film is still or the contents in the two-dimensional film remain fixed, there is only one fixed depth image generated. Accordingly, the user may only view monotonous images on a conventional stereoscopic image display device. Moreover, if the film is composed of protogenous stereoscopic still images (i.e. stereoscopic images captured by a depth camera or three-dimensional image capturing equipments), there is only one depth value for the stereoscopic images displayed on the stereoscopic display device. When dynamic images (two-dimensional images or stereoscopic images) are inputted, a corresponding depth image can be obtained by analyzing each input image. However, the extrema (i.e. maximum and minimum) or middle values of the depth values applied in the stereoscopic image rendering unit 220 are fixed values. That is, even if the input images are dynamic images, the depth of the input images are still limited. For example, the depth of the input images may be limited within 10cm to 100cm inward to the display screen, and thus there is no dynamic depth range for the input images.

Further, no matter if the input image is a simple two-dimensional image or a stereoscopic image, it is necessary to convert the input image to a two-dimensional image with a corresponding depth image thereof. If the input image is a two-dimensional image with a corresponding depth image, the image conversion procedure can be omitted. After receiving the two-dimensional image and the corresponding depth image, the stereoscopic image rendering unit 220 may display the stereoscopic image on the stereoscopic image display device.

In an embodiment, the dynamic depth image adjusting device 200 can be applied to devices capable of converting two-dimensional images to three-dimensional images or detecting depth of the contents in stereoscopic images, such as display devices or personal computers. The dynamic depth image adjusting device 200 can be implemented by specific hardware or logic circuits, or executed by a processor in the form of program codes, but the invention is not limited thereto.

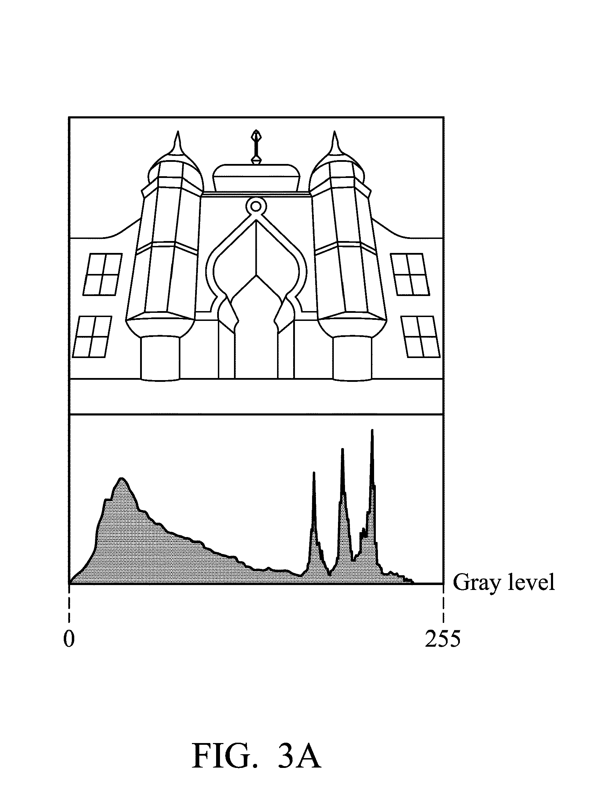

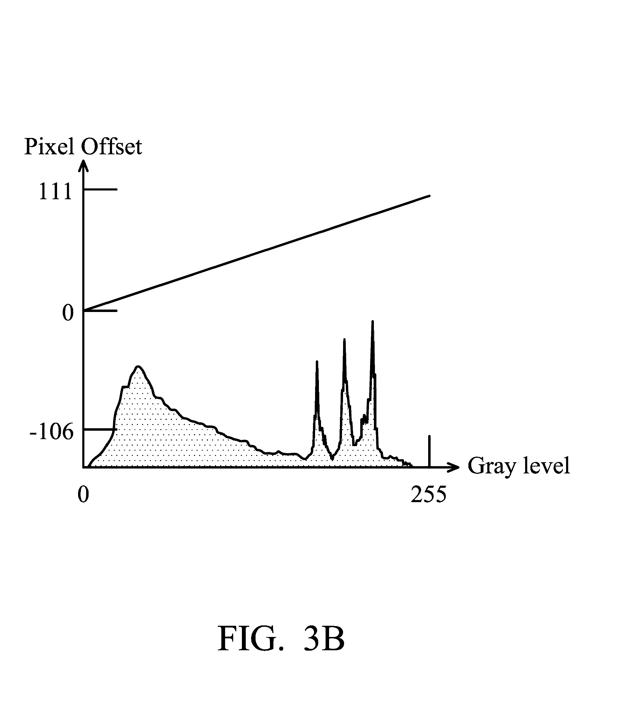

When the stereoscopic images are displayed on the stereoscopic image display device, there are three ways to display the stereoscopic images, such as positive parallax, zero parallax, and negative parallax. Specifically, the positive parallax indicates that the stereoscopic images are rendered inward to the display screen. The zero parallax indicates that the stereoscopic images are rendered on the display screen. The negative parallax indicates that the stereoscopic images are rendered between the display screen and eyes of the user. In an embodiment, assume that the user is sitting 1m in front of a LCD display with a size of 46 inches and a resolution of 1920x1080, and the eye distance between two eyes of the user is 6.25cm. FIG. 3A illustrates a histogram of the grey levels in a depth image corresponding to a two-dimensional image according to an embodiment of the invention. FIG. 3B illustrates a diagram of the adjusting curve of the pixel-offset profile according to an embodiment of the invention Referring to FIG. 3B, when the input image is moved 111 pixels inward to the display screen (i.e. positive parallax or the offset distance between the left eye image and the right eye image is 111 pixels), the scene in the input image can be 10 meters inward to the display screen. When the input image is moved -106 pixels outward to the display screen (i.e. negative parallax), the scene in the input image can be 53cm outward to the display screen. Briefly, the application may adjust the depth image or the two-dimensional image with a pixel-offset profile to generate a distinguishing visual effect over the original stereoscopic image (or the two-dimensional image).

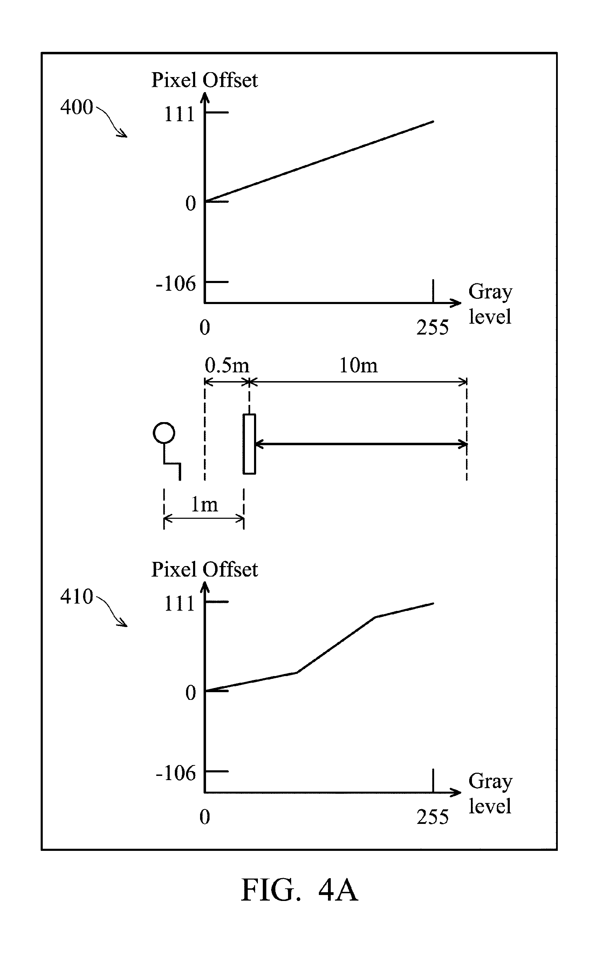

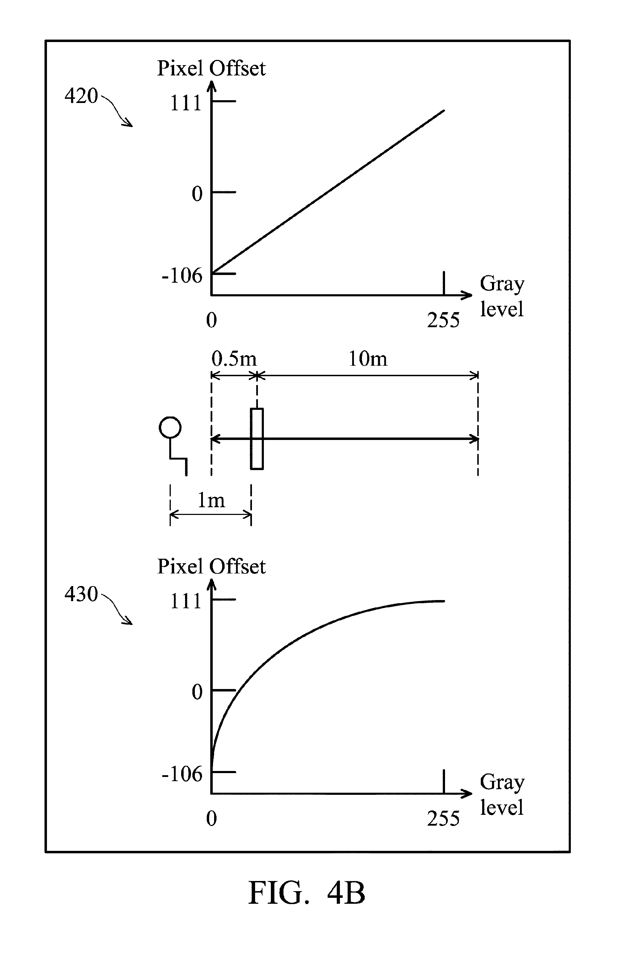

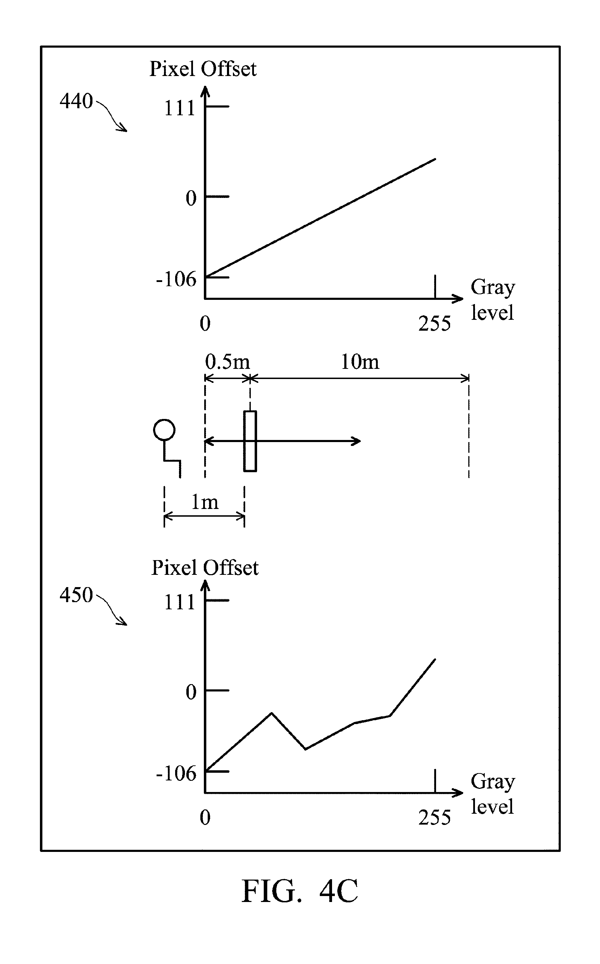

FIGs. 4A-4C illustrate a diagram of the pixel-offset profile according to an embodiment of the invention. Referring to the embodiments of FIG. 3, when the range of the grey levels of the depth image is mapped from 0∼255 to 0∼111, the scene in the input image can be 10 meters inward to the display screen. When the range of the grey levels of the depth image is mapped from 0∼255 to -106∼111, the scene in the input image can be within the depth range from 10 meters inward to 53cm outward to the display screen. Referring to FIG. 4A, the range of the pixel offset is from 0 to 111, but the adjusting curves for adjusting the histograms of the depth images are slightly different, and thus the depth distributions observed by the user may also have slight differences. Referring to FIG. 4B, the range of the pixel offset is from -106 to 111, but the adjusting curves for adjusting the histogram of the depth images are slightly different. The adjusting curve in the diagram 420 is a linear line to averagely adjust the depth. The adjusting curve in the diagram 430 is a quadratic curve to adjust the depth. Accordingly, the scene closer to the lens may have fewer differences in depth, and thus the depth distributions observed by the user may also have slight differences. Referring to FIG. 4C, the range of the pixel offset is from -106 to 50. The adjusting curve in the diagram 440 is a linear line to adjust the depth. The adjusting curve in the diagram 450 may have multiple turning points capable of adjusting depth values in different ranges, respectively.

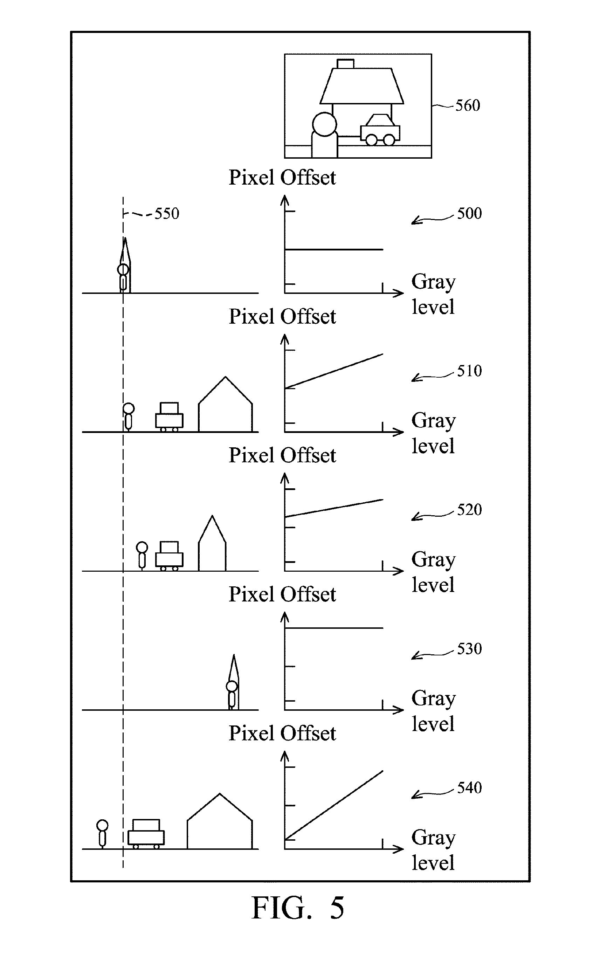

FIG. 5 illustrates a diagram of the relationship between the adjusting curve and the depth image according to an embodiment of the invention. The adjusting curves in diagrams 500∼540 may indicate different pixel offsets to adjust the gray levels of the depth image. The adjusting curve in the diagram 510 may indicate the default adjusting curve, which limits the range of the pixel offset of the depth image to be within from 0 to 111. The adjusting curve in the diagram 500 may indicate that all the depth values of the depth image are adjusted to 0, and thus the user may observe that all the objects in the image are located on the display screen 550 when observing from the left side of the display screen 550. The adjusting curve in the diagram 520 may set the minimum of depth values to 20, and thus the slope of the adjusting curve in the diagram 520 is smaller than that of the adjusting curve in the diagram 510. Then, the user may sense that the objects in the image are slightly shifted inward to the display screen 550 with less depth variations. The adjusting curve in the diagram 530 may set the depth values of the depth image to 111, and thus the user may sense that the objects in the image are located in the deepest place with the largest depth in the image. The adjusting curve in the diagram 540 may set the minimum of the depth values of the depth image to -80, and thus the user may sense that the foreground of the image is outward to the display screen 550 with larger depth variations of the scene. Specifically, changing the corresponding pixel offset values (i.e. depth values) by alternating the adjusting curves can be regarded as changing of the pixel-offset profile.

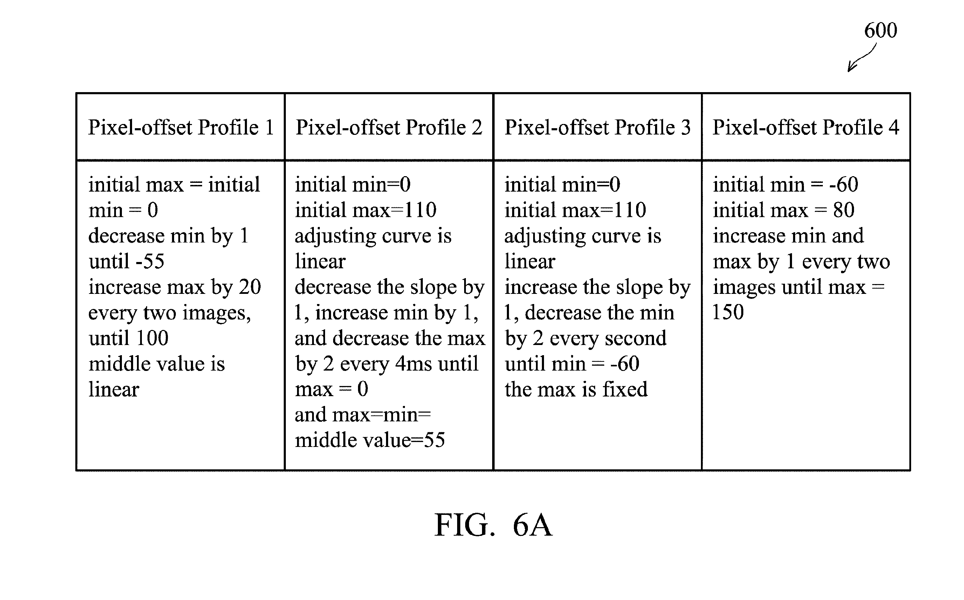

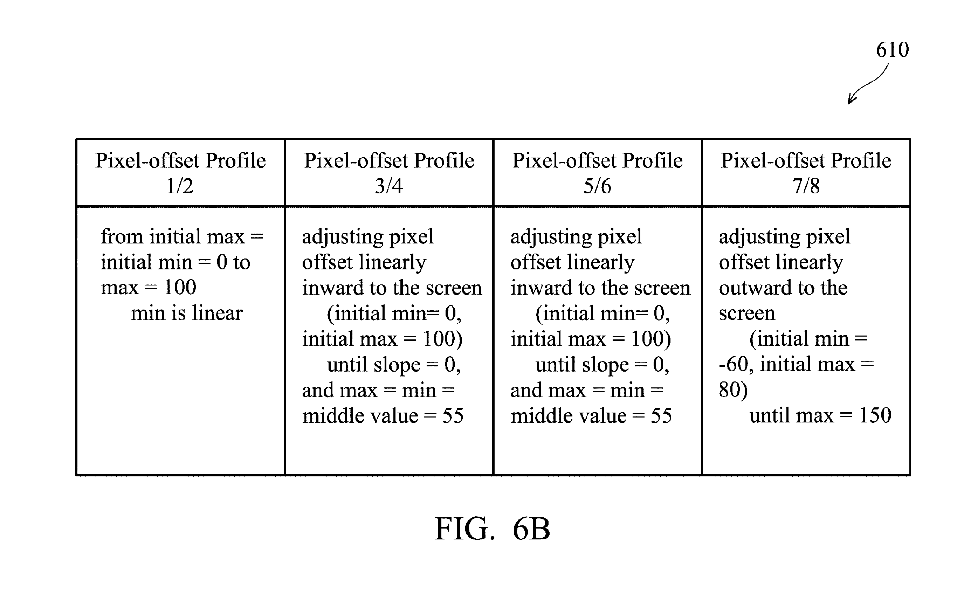

FIG. 6A illustrates a table of the pixel-offset profile of a still image according to an embodiment of the invention. In an embodiment, the pixel-offset profile with a predetermined number of images, a predetermined time interval or a repeated pattern can be applied to the corresponding depth image of a still image, wherein the pixel offset values (i.e. maximum, minimum, and middle value of the depth values) can be adjusted by the pixel-offset profile, and the depth values of the depth image can be adjusted by various adjusting curves, but the invention is not limited thereto. FIG. 6B illustrates a table of the pixel-offset profiles of a dynamic image according to an embodiment of the invention. In another embodiment, when the input images are dynamic images (i.e. non-still images), the pixel-offset profile in the table 610 should be applied to the corresponding depth image of the input image, but the invention is not limited thereto. In yet another embodiment, the pixel-offset profile can be chosen by a setting value from the depth analyzer 210. A specific or corresponding pixel-offset profile can also be chosen by an external device (i.e. a scalar).

In yet another embodiment, the depth analyzer 210 may store depth images of different two-dimensional images, and the stereoscopic image rendering unit 220 may store the corresponding pixel-offset profiles. The stereoscopic image rendering unit 220 may apply the pixel-offset profile and the depth image corresponding to the first two-dimensional image in the dynamic images to the remaining two-dimensional images after the first two-dimensional image. Also, the stereoscopic image rendering unit 220 may match the remaining two-dimensional images after the first two-dimensional image in the dynamic images with the respective depth image and the pixel-offset profile of the first two-dimensional image. Then, the stereoscopic image rendering unit 220 may generate stereoscopic images according to the remaining two-dimensional images, and the depth image and pixel-offset profile corresponding to the first two-dimensional image. Alternatively, the stereoscopic image rendering unit 220 may generate stereoscopic images according to the remaining two-dimensional images, the depth images thereof, and the pixel-offset profile corresponding to the first two-dimensional image.

In an embodiment, when the user is viewing a three-dimensional game (not converted from two-dimensional images), the stereoscopic image rendering unit 220 may know that the input images are still images from the depth analyzer 210, select a pixel-offset profile suitable for still images to set the slope of the adjusting curve to 0, and increase the slope of the adjusting curve. Meanwhile, the user may sense that the displayed images may become more stereoscopic gradually, and the range of the depth values of the displayed images may also become larger as if the displayed images act as motion images.

In another embodiment, when the user is viewing a stereoscopic film (not converted from two-dimensional images) which is continuously displayed, the stereoscopic image rendering unit 220 may know that the input images are dynamic images, and switch to a specific pixel-offset profile according to a profile control signal from an external device (e.g. a scalar). For example, the stereoscopic image rendering unit 220 may apply the pixel-offset profile 1 to the 1st∼60th images in the stereoscopic film, and set the slope of the adjusting curve to 0. Thus, the film has no stereoscopic effect. Then, for the 61st∼180th images in the stereoscopic film, the stereoscopic image rendering unit 220 may increase the slope of the adjusting curve of the pixel-offset profile, set the depth value at the minimum value 0 in the beginning, and subtract the depth value by 1 every image until the depth value is -50. Meanwhile, the user may sense that the displayed images become more stereoscopic gradually and the range of the depth values of the displayed images may also become larger, and the foreground of the displayed image may become outward to the display screen gradually. For the 181st∼300th images in the stereoscopic film, the stereoscopic image rendering unit 220 may decrease the slope of the adjusting curves of the pixel-offset profile gradually, and decrease the maximum and minimum depth values to -50 gradually. Meanwhile, the user may sense that the content of the images becomes outward to the display screen, and the range of the depth values becomes smaller. At last, the content of the displayed image is only slightly outward to the display screen. For the 301st∼500th images in the stereoscopic film, the stereoscopic image rendering unit 220 may sustain the slope of the adjusting curve of the pixel-offset profile, but increase the maximum and minimum depth values to 100 gradually. Meanwhile, the user may sense that the content of the images may become inward at the deep place, which is outward to the display screen in the beginning. The aforementioned embodiments only describe how the application applies the pixel-offset profile and the corresponding visual effects, but the invention is not limited thereto.

In yet another embodiment, the user is viewing stereoscopic pictures (converted from two-dimensional images). Since the pictures are still images, the stereoscopic image rendering unit 220 may know that the input images are still images from the depth analyzer 210, and apply a pixel-offset profile suitable for still images to the depth images corresponding to the input images. The stereoscopic image rendering unit 220 may use the original slope of the adjusting curve of the pixel-offset profile at the beginning, increase the maximum of the depth values of the depth image from 50 to 150 gradually, and increase the slope of the adjusting curve gradually. Meanwhile, the user may sense that the content of the displayed images may be stereoscopic and inward to the display screen in the beginning, and the range of the depth values may be extended to 2 meters inward to the display screen gradually.

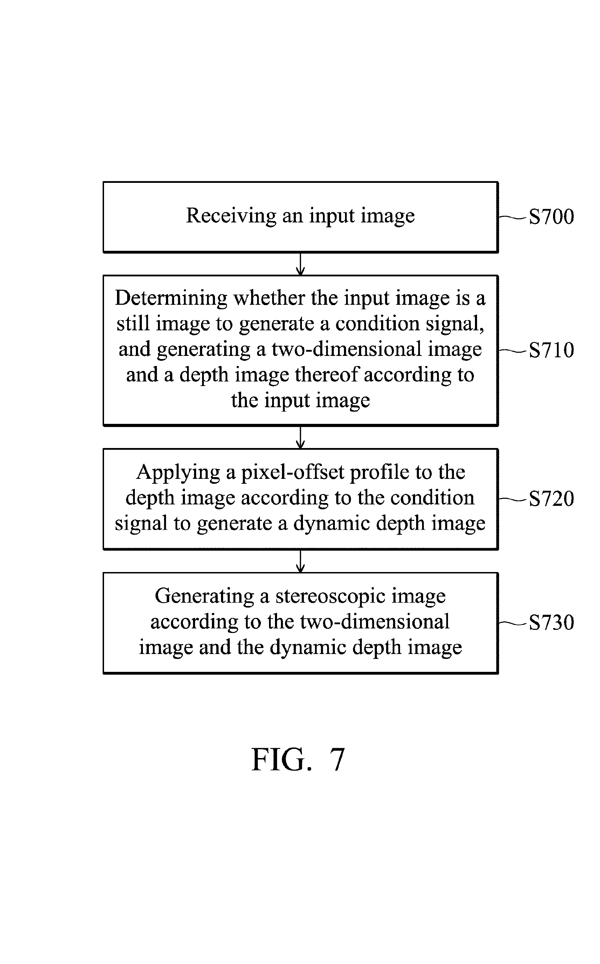

FIG. 7 illustrates a flow chart of the dynamic depth image adjusting method according to an embodiment of the invention. In step S700, the dynamic depth image adjusting device 200 may receive at least one input image, wherein the input image can be a simple two-dimensional image or a stereoscopic image (i.e. a two-dimensional image and the corresponding depth image, or a stereoscopic image which can be converted to a two-dimensional image and the corresponding depth image, such as a simple three-dimensional image or a stereoscopic image). In step S710, the depth analyzer 210 may determine whether the input images are still images, generate a condition signal to the stereoscopic image rendering unit 220, and generate a two-dimensional image and a corresponding depth image according to the input image (i.e. if the input image is a stereoscopic image, no conversion is needed). In step S720, the stereoscopic image rendering unit 220 may receive the condition signal, the generated two-dimensional image and the corresponding depth image from the depth analyzer 210, and the stereoscopic image rendering unit 220 may apply a pixel-offset profile to the depth image according to the condition signal (e.g. a predetermined number of images, a predetermined time interval or a repeated pattern, but not limited) to alternate the maximum, minimum and middle values of the gray levels of the depth image, thereby adjusting the distribution of depth values of the depth image and generating a dynamic depth image. In step S730, the stereoscopic image rendering unit 220 may generate a stereoscopic image according to the two-dimensional image and the dynamic depth image.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A dynamic depth image adjusting method applied in a dynamic depth image adjusting device, comprising:
receiving at least one input image;
generating a two-dimensional image and a depth image thereof according to the input image; and
generating a plurality of dynamic depth images by applying a pixel-offset profile to the depth image.

2. The dynamic depth image adjusting method as claimed in claim 1, wherein the depth image is a gray level image, and the pixel-offset profile is configured to adjust pixel offset values of gray levels in the gray level image.

3. The dynamic depth image adjusting method as claimed in claim 2, wherein the step of generating the plurality of dynamic depth images by applying the pixel-offset profile to the depth image further comprises:
applying the pixel-offset profile to the depth image according to a predetermined time interval.

4. The dynamic depth image adjusting method as claimed in claim 2, wherein the step of generating the plurality of dynamic depth images by applying the pixel-offset profile to the depth image further comprises:
applying the pixel-offset profile to the depth image according to a predetermined number of images.

5. The dynamic depth image adjusting method as claimed in claim 1, further comprising:
generating a plurality of stereoscopic images according to the two-dimensional image and the plurality of dynamic depth images; and
displaying the plurality of stereoscopic images.

6. The dynamic depth image adjusting method as claimed in claim 1, further comprising:
generating a plurality of second two-dimensional images and a plurality of corresponding second depth images according to the input image;
generating a plurality of second stereoscopic images according to the plurality of second two-dimensional images, the depth image and the pixel-offset profile; and
displaying the plurality of second stereoscopic images.

7. The dynamic depth image adjusting method as claimed in claim 1, further comprising:
generating a plurality of second two-dimensional images and a plurality of corresponding second depth images according to the input image;
generating a plurality of second stereoscopic images according to the plurality of two-dimensional images, the plurality of corresponding second depth images, and the pixel-offset profile; and
displaying the plurality of second stereoscopic images.

8. A dynamic depth image adjusting device, comprising:
a depth analyzer configured to receive at least one input image, and generate a two-dimensional image and a depth image thereof according to the input image; and
a stereoscopic image rendering unit configured to receive the two-dimensional image and the depth image, and generate a plurality of dynamic depth images by applying a pixel-offset profile to the depth image.

9. The dynamic depth image adjusting device as claimed in claim 8, wherein the depth image is a gray level image, and the pixel-offset profile is configured to adjust a pixel shifting level of gray levels in the gray level image.

10. The dynamic depth image adjusting device as claimed in claim 9, wherein the stereoscopic image rendering unit further applies the pixel-offset profile to the depth image according to a predetermined time interval.

11. The dynamic depth image adjusting device as claimed in claim 9, wherein the stereoscopic image rendering unit further applies the pixel-offset profile to the depth image according to a predetermined number of images.

12. The dynamic depth image adjusting device as claimed in claim 8, wherein the stereoscopic image rendering unit further generates a plurality of stereoscopic images according to the two-dimensional image and the plurality of dynamic depth images, and displays the plurality of stereoscopic images.

13. The dynamic depth image adjusting device as claimed in claim 8, wherein the depth analyzer further generates a plurality of second two-dimensional images and a plurality of corresponding second depth images according to the input image, and the stereoscopic image rendering unit further generates a plurality of second stereoscopic images according to the plurality of second two-dimensional images, the depth image and the pixel-offset profile, and displays the plurality of second stereoscopic images.

14. The dynamic depth image adjusting device as claimed in claim 8, wherein the depth analyzer further generates a plurality of second two-dimensional images and a plurality of corresponding second depth images according to the input image, and the stereoscopic image rendering unit further generates a plurality of second stereoscopic images according to the plurality of second two-dimensional images, the plurality of corresponding second depth images and the pixel-offset profile, and displays the plurality of second stereoscopic images.
